# EUROPEAN PATENT SPECIFICATION

(11) **EP 0 572 068 B1**
(45) Date of publication and mention of the grant of the patent: **12.08.1998**
(21) Application number: 93201420.2
(22) Date of filing: 18.05.1993
(51) Int. Cl.: A01K 13/00, A01J 7/00, A01J 7/04

(54) **A construction for automatically milking animals**
Gerät zum automatischen Melken von Tieren
Dispositif pour la traite automatique d'animaux

(30) Priority: 26.05.1992 NL 9200924
(43) Date of publication of application: 01.12.1993
(60) Divisional application: 97203757.6
(73) Proprietor: MAASLAND N.V., 3155 PD Maasland (NL)
(72) Inventor: van der Lely, Cornelis, CH-6300 Zug (CH)
(74) Representative: Mulder, Herman

(56) References cited:
- EP-A- 313 109
- EP-A- 535 755
- EP-A- 0 309 036
- EP-A- 0 332 231
- EP-A- 0 476 771
- DE-A- 1 607 165
- FR-A- 2 159 370
- FR-A- 2 501 965
- FR-A- 2 559 351
- FR-A- 2 630 298

## Description

The invention relates to a construction for automatically milking animals, such as cows, comprising a milkbox extending in a longitudinal direction and a milking machine, as well as a cleaning member for cleaning the udder and/or teats of an animal, which cleaning member during operation is rotatable and in movable in a direction which deviates from the longitudinal direction of the milkbox.

Such a construction is known from the European patent application 0 476 771. In said application the cleaning members can be rotated around a vertical pivotal axis. This has the disadvantage that at the start of the rotation the component of lateral movement is 100%, while this component of movement gradually decreases. The construction has further the disadvantage that, during cleaning of the teats, the cleaning member is attached to a robot arm end portion which is rotatable around said vertical pivotal axis. This results in that during cleaning of the teats of the animal the whole robotarm end portion together with the cleaning members has to be rotated about said vertical pivotal axis. Therefore, relatively powerful cylinders are necessary, while the movement of the cleaning members is relatively slow, due to the large and heavy construction. The said construction has furthermore the disadvantage that during cleaning, part of the robotarm construction has to be moved in order to move the cleaning member.

The invention has for its object to provide a cleaning unit of the type described, in which the said disadvantages do not occur or are at least prevented to a certain extent.

To that end, a construction as defined in the opening paragraph is, according to the invention, characterized in that the cleaning member is attached to a slide, mounted movable in the lateral direction of the milkbox, by means of which the cleaning member is movable in a lateral direction during the cleaning of the udder and/or teats of the animal.

This enables a solely movement of the cleaning member in the lateral direction of the milkbox, while the construction is relative compact.

In accordance with a further feature of the invention, the cleaning member is rotatable during operation in two directions. In accordance with a still further feature of the invention, the cleaning member includes at least one shaft which extends in the longitudinal direction of the milkbox. During cleaning, the shaft is inserted between the front and rear teats and moved towards a side of the animal. When the cleaning member rotates clockwise, then preferably the cleaning member is moved from the centre position to the right-hand side of the animal (taken from the rear of the animal). After the cleaning member has passed the teats, the direction of rotation of the cleaning member is reversed, as a result of which it rotates anti-clockwise. Thereafter the cleaning member is moved to the centre position, so that the other side of the teats are cleaned during this motion. Thus, an adequate cleaning of both sides of the teats is obtained.

A particularly advantageous effect is obtained with the construction in accordance with the invention when the shaft of the cleaning member is hollow and is provided with perforations; this renders it namely possible to pass a cleaning and/or disinfecting solution through the perforations during the cleaning operation.

In a preferred embodiment, the shaft of the cleaning member is driven by a pneumatic motor. In accordance with a further feature of the invention, a plurality of textile discs are provided on the shaft of the cleaning member. The textile discs are spaced apart, so that during cleaning a teat is cleaned between two adjacently arranged textile discs, the discs operating with a rubbing motion.

So as to provide an advantageous movement of the cleaning member in the vertical direction, the cleaning member includes a four-hinge linkage construction. In accordance with a further feature of the invention, the implement further includes pressure adjusting means, with the aid of which the pressure with which an operating cylinder pushes the cleaning member against the animal's udder can be adjusted.

In accordance with a further feature of the invention, the cleaning member includes a pneumatic shifting member, by means of which the cleaning member is movable during operation. For that purpose, the cleaning member is attached to a slide extending in the transverse direction of the milkbox.

To determine the position of the cleaning member on the slide, the implement in accordance with the invention can be further provided with first positioning means.

In accordance with a still further feature of the invention, the cleaning member is mounted on a robot arm construction, which is rotatable through at least 180° about a vertical shaft.

In order to determine the position of the udder and/or the teats of an animal standing in the milkbox, the construction in accordance with the invention can further include recording means arranged in or on the milkbox floor, with the aid of which, on the basis of the position of an animal's leg on the floor, the location of the udder and/or the teats can be determined.

In accordance with a further feature of the invention, the recording means have a surface area which has at least a size equal to the surface area of the bottom side of the leg of the animal to be milked. A relatively large surface area with recording means has the advantage that each time the animal enters the milkbox, it is not necessary to take measures to ensure that the animal always takes up a position precisely on the recording means.

In addition to the fact that using the recording means the position of the udder and/or the teats can be determined, it is furthermore possible in accordance with the invention also to determine, using the recording means, the weight of an animal in the milkbox. The invention therefore also relates to a construction for automatically milking animals, such as cows, comprising a milkbox and a milking machine, characterized in that the floor of the milkbox is equipped with recording means, by means of which the weight of an animal in the milkbox can be determined.

In accordance with a further feature of the invention, the recording means are depressible.

In accordance with a further feature of the invention, the recording means are provided in four locations in or on the floor, on which the animals' legs bear when the animal is in the milkbox.

In a preferred embodiment in accordance with the invention, the construction includes an animal identification system in which data about the position of the udder of an animal can be stored and from which the data can be read. In accordance with a further feature of the invention, the construction includes second positioning means which, together with the recording means, can determine the position of a leg of an animal in the milkbox. When an animal enters the milkbox, then, on the basis of a transponder attached to the animal's neck and the identification system, it can be determined which animal is concerned and also the position of the udder and/or the teats relative to a leg of the relevant animal. This is possible because the position of the leg of the animal in the milkbox floor can be determined with the recording means, as a result of which in combination with the data of the animal identification system, also the position of the udder and/or the teats of the relevant animal is known. Using the information about the position of the udder and/or the teats determined by means of the animal identification system and the recording means, the cleaning member and/or a milk cluster can thereafter be moved up to the udder and/or teats.

In accordance with a feature of the invention, the signal produced by the recording means is applied to a computer and stored in a memory. On the basis of the signal produced by the recording means, the computer determines the weight of the relevant animal. The farmer can read the weight of the animal on a display of the computer. Each time the animal enters the milkbox, the weight is determined and stored. In this manner the farmer can read from the memory the change in weight of each animal during, for example, an X-number of days. From this body weight record the farmer can, for example, derive in which stage of the lactation cycle the animal is, so that he knows when the cow is "dry". In addition, the body weight record can in some cases also be an indication of the health condition of the animal.

For a better understanding of the invention and to show how the same may be carried into effect, an embodiment of a construction in accordance with the invention will now be described with reference, by way of example, to the accompanying drawings, in which:
Figure 1 is a plan view of a milkbox equipped with a cleaning member and recording means, with the aid of which the position of a leg of an animal on the milkbox floor can be determined;
Figure 2 is an enlarged view of the cleaning member and the recording means;
Figure 3 is a side view taken on the line III-III in Figure 2;
Figure 4 is a schematic rear view taken on the line IV-IV in Figure 1, of the direction of rotation of the cleaning member during cleaning of the udder and/or teats of an animal;
Figure 5 shows an alternative embodiment of the recording means, as shown in the Figures 1 to 3.

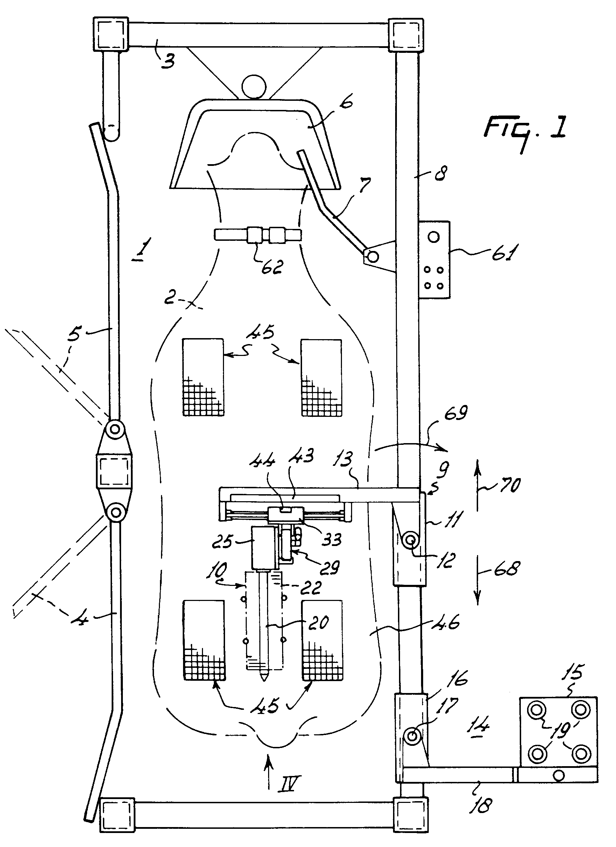

Figure 1 shows a milkbox 1 in which a cow 2 is present. A frame 3, which has an entrance door 4 and an exit door 5, is provided around the milkbox 1. A feed trough 6 and expelling means 7 are further attached to the frame 3.

Attached by means of a first robot arm construction 9 to a frame beam 8 extending in the longitudinal direction of the milkbox 1 there is a cleaning member 10. The first robot arm construction 9 includes a first sliding block 11 which is fitted on the frame beam 8 and is movable in the longitudinal direction of the milkbox 1 over the frame beam 8. The first sliding block 11 includes a first vertical shaft 12, about which a first horizontally directed beam 13 can be pivoted.

In addition, a milking machine 15 is attached to the frame beam 8 by means of a second robot arm construction 14. The second robot arm construction 14 includes a second sliding block 16 which has a second vertical shaft 17, about which a second horizontal beam 18 is arranged pivotably. The milking machine 15 comprises four teat cups 19.

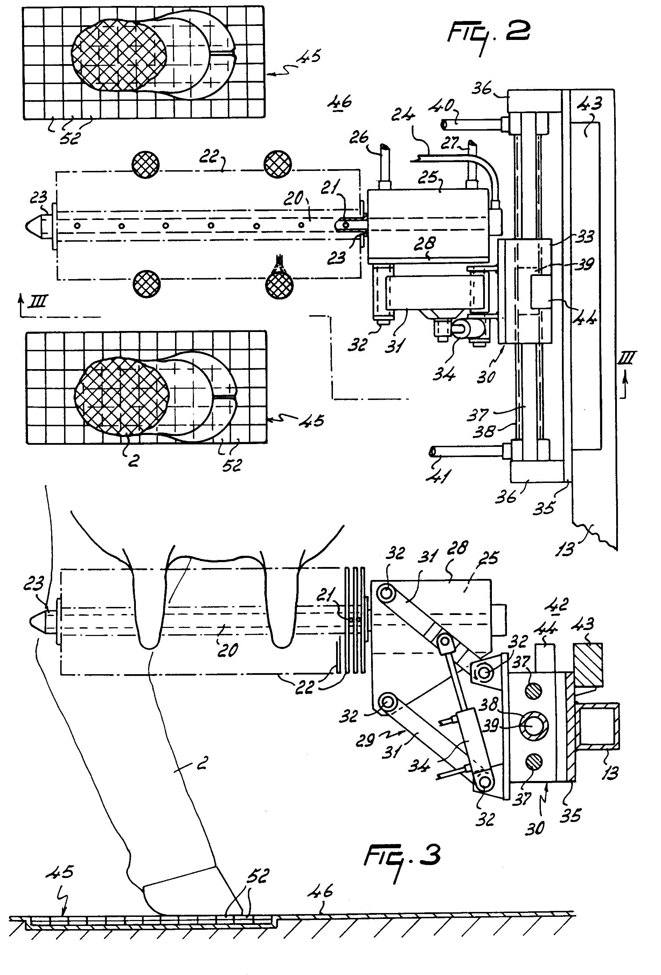

Figure 2 shows the cleaning member 10 to an enlarged scale. The cleaning member 10 includes a hollow shaft 20 which at its circumference is provided with perforations 21. As is shown in Figure 3, textile discs 22 are mounted on the hollow shaft 20. The textile discs 22 are slightly interspaced, so that there is a clearance between two adjoining textile discs 22. The textile discs 22 are clamped on the hollow shaft 20 between two nuts 23 located at the two ends of the hollow shaft 20. The perforations 21 in the hollow shaft 20 are in a position in which an intermediate space is formed by two adjoining textile discs 22. As a result thereof, a cleaning and/or disinfecting solution can be sprayed during cleaning of the teats and/or the udder into the intermediate spaces between two adjoining textile discs 22 via the perforations 21. The cleaning and/or disinfecting solution is fed to the hollow shaft 20 via a first supply line 24.

The hollow shaft 20 is driven by a pneumatic motor 25 which is drivable in two directions. To that end, the pneumatic motor 25 has a first air supply line 26 and a second air supply line 27. By supplying compressed air to the pneumatic motor 25 via the first air supply line 26, the hollow shaft 20 will start to rotate clockwise, wheras, when compressed air is supplied to the pneumatic motor 25 via the second air supply line 27, the hollow shaft 20 will start to rotate anti-clockwise. It will be obvious that for the drive of the hollow shaft 20 a, for example, electric or hydraulic motor may alternatively be used instead of a pneumatic motor.

As is shown in Figure 3, a vertical plate 28 is provided at one side of the pneumatic motor 25. Via a four-hinge linkage construction 29, the vertical plate 28 is connected to a slide 30. The four-hinge linkage construction 29 comprises two strips 31 which extend in parallel and at some distance from each other and at their ends are connected pivotably to horizontal pivot shafts 32. The strips 31 have one end connected to the vertical plate 28 and their other end to a block 33 forming part of the slide 30. Disposed between the two strips 31 is moreover an operating cylinder 34, with the aid of which the four-hinge linkage construction 29 is movable in height. The operating cylinder 34 is, preferably, a pneumatic cylinder.

The slide 30 includes a vertical strip 35 which is rigidly connected to the first beam 13 of the first robot arm construction 9. At both ends, the vertical strip 35 is provided with rectangular blocks 36 which are attached vertically and at a square angle to the strip 35. Two horizontal guide rails 37, which are located remote from each other and one below the other, are positioned between the two rectangular blocks 36. In addition, a horizontal cylinder 38, which by means of its two ends is also connected to the rectangular blocks 36, is accommodated between the two guide rails 37. The block 33 connected to the four-hinge linkage construction 29 is arranged such that it is slidable over the guide rails 37 and the cylinder 38.

The cylinder 38 contains a movable, rod-like free piston 39 which has a diameter approximately equal to the inner diameter of the cylinder 38. The free piston 39 is made of a magnetic meterial, and the cylinder 38 is made of a synthetic resin material. At one end, the cylinder 38 is provided with a third air supply line 40, whilst a fourth air supply line 41 is attached to the other end. By applying compressed air to the cylinder 38 via the third air supply line 40, the free piston 39 is thus moved towards the fourth discharge line 41. Inversely, the free piston 39 is moved towards the third air supply line 40 when compressed air is applied by the fourth air supply line 41 to the cylinder 38.

The block 33 connected to the four-hinge linkage construction 29 is made of a ferrous material, so that the block 33 tracks the motion of the free piston 39. As a result thereof, it is possible to reciprocate the cleaning member 10 in operation along the slide 30 in the transverse direction of the milkbox 1. To determine the position of the block 33 on the slide 30, first positioning means 42 are present. The first positioning means 42 include a coding strip 43 which is positioned against the vertical strip 35 and substantially extends through the overall width of the cylinder 38. The first positioning means 42 further include, disposed on the block 33, a read sensor 44 with the aid of which the coding strip 43 is scannable. The signal produced by the read sensor 44 is applied to a computer, not further shown, with the aid of which the position of the cleaning member 10 on the slide 30 can be determined.

The construction such as it is shown in Figure 1, further includes recording means 45 which in the embodiment are incorporated in the floor 46 of the milkbox 1. As is shown in Figure 3, the recording means 45 are arranged in a depression in the floor 46, so that the recording means 45 are flush with the floor 46. It will, however, be obvious that the recording means 45 may alternatively be arranged on the floor 46 of the milkbox 1.

In the first embodiment, such as it is shown in Figures 1 to 3, the recording means 45 are constituted by piezo-electric elements which are known per se. In the embodiment of Figure 1, the recording means 45 are positioned in four locations in the floor 46 of the milkbox 1. The locations, in which the recording means 45 are provided, have been chosen such that, when an animal assumes a posture in the milkbox 1, it stands with its legs on all four recording means 45. In a preferred embodiment, the width of the surface area in which the recording means 45 are accommodated amounts to 25 cms, whereas the length is approximately 50 cms. It will be obvious that in given circumstances, for example for milking animals of a different type (goats), it is possible to deviate from the said dimensions.

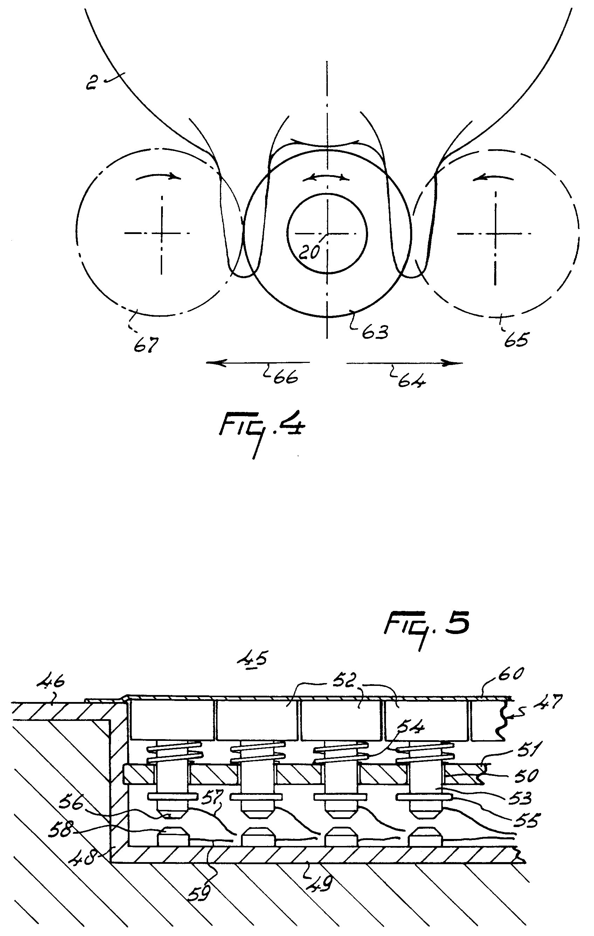

In a second embodiment such as it is shown in Figure 5, the recording means 45 comprises a plurality of pressure-responsive elements 47 which are arranged in a side-by-side relationship. In this embodiment, the pressure-responsive elements 47 are formed by electromechanical contacts. The electromechanical contacts are disposed in a depression 48 in the floor 46. Just above the bottom 49 of the depression 48, a plate 51 is disposed which is provided with bores 50 and on which the individual pressure-responsive elements 47 are attached. Each of the pressure-responsive elements 47 includes a square block 52 which is provided with a vertical rod 53. A pressure spring 54 is pushed over the vertical rod 53. Each vertical rod 53 is inserted through a bore 50 in the plate 51 and locked at the bottom side by a locking washer 55. The pressure springs 54 are thereby confined between the bottom end of a block 52 and the upper side of the plate 51. At the bottom sides, the vertical rods 53 are slightly bevelled and provided with a first contact plane 56, to which a first electric lead 57 is connected. On the bottom 49, straight under each vertical rod 53, a second contact plane 58 is provided, to which a second electric lead 59 is connected. In the rest condition, the first contact plane 56 is at some distance from the second contact plane 58. When one or more square blocks 52 are pushed downwardly against the action of the spring, then at a given moment the first contact plane 56 will come to bear on the second contact plane 58, which results in that the first electric lead 57 is connected to the second electric lead 59, in response to which a signal is applied to the computer.

So as to prevent dirt and other contaminations from penetrating between the blocks 52 or into the depression 48 in the floor 46, the upper side of the pressure-responsive elements 47 is covered with a film layer 60.

The construction in accordance with the invention further may include an animal identification system 61, which in the embodiment shown in Figure 1 is attached to the frame beam 8. The animal identification system 61 responds to a transponder 62 provided around the neck of the cow 2.

The construction described in the foregoing operates as follows:

When a cow 2 enters the milkbox 1, then the animal identification system 61 receives from the transponder 62 a code which is unique for the cow 2. On the basis of this code, a computer connected to the animal identification system 61 determines which cow 2 has taken place in the milkbox 1. In the computer, not shown, all the data known of the animal are read from the computer memory and kept ready for use. After the cow 2 has taken up its position in the milkbox 1, the recording means 45 are energized, since the cow 2 stands with its legs on the recording means 45. As the surface area of the recording means 45 is many times larger than the surface area of the bottom side of the legs of the cow 2, only a number of piezoelectric elements or pressure-responsive elements 47 are depressed, against the action of a spring. The piezoelectric elements or pressure-responsive elements 47 depressed by the legs of the cow 2 apply a signal to the computer, on the basis of which the position of the legs of the cow 2 on the floor 46 of the milkbox 1 can accurately be determined. To that end, the position of each piezoelectric and/or pressure-responsive element 47 is recorded in the memory of the computer. Additionally, in the computer memory is stored the position of the udder and/or teats of each animal with respect to one or more legs of the relevant animal. When the position of one or more legs has been determined with the aid of the signals supplied by the recording means 45, then for the relevant cow the position of the udder and/or teats is read from the computer memory. Using the coordinates of the udder and/or teats, read from the memory, the cleaning member 10 is moved with the aid of the first robot arm construction 9 to the udder and/or teats. During positioning of the cleaning member 10, the first sliding block 11 is moved along the frame beam 8 and the first robot arm construction 9 pivots about the first vertical shaft 12, whilst simultaneously the block 33 is moved along the slide 30. The distance through which the first sliding block 11 and the block 33 are moved, is determined on the basis of the coordinates, corresponding to the position of the udder and/or teats, of the relevant cow. In this situation, the cleaning member 10 is positioned such that the hollow shaft 20 bearing the textile discs 22 arrives in the longitudinal direction of the milkbox 1 between the teats. This starting state 63 is illustrated in Figure 4 by solid lines. Thereafter the pneumatic motor 25 is made operative by applying compressed air via the first air supply line 26. This results in that the textile discs 22 rotate clockwise. Simultaneously, the hollow shaft 20 is moved in the direction of the first arrow 64. As soon as the textile discs 22 have passed the teats, which in Figure 4 is represented by the first broken lines 65, the direction of rotation of the pneumatic motor 25 is reversed (the textile discs 22 rotate anti-clockwise) by energizing the second air supply line 27. Thereafter the hollow shaft 20 bearing the textile discs 22 is moved towards the starting position 63. For cleaning the other two teats, the motion in the direction indicated by the second arrow 66 is continued, after the starting position 63 has been reached, until the textile discs 22 have arrived in the position indicated in Figure 4 by second broken lines 67. Thereafter the direction of rotation is reversed (the textile discs 22 rotate clockwise) and the hollow shaft 20 equipped with the textile discs 22 is moved towards the starting position 63.

During cleaning, it is possible to supply cleaning and/or disinfecting liquid via the hollow shaft 20 and the perforations 21. In addition, during cleaning, the hollow shaft 20 can be reciprocated slightly in the longitudinal direction of the milkbox, whereby a still more intensive cleaning of the udder and/or teats can be obtained. After the teats and/or the udder have been cleaned sufficiently, the first sliding block 11 is moved in the direction of the third arrow 68 shown in Figure 1. Thereafter the robot arm construction 9 is rotated through 180° about the first vertical shaft 12 in the direction of the fourth arrow 69, whereafter the first sliding block 11 is moved in the direction of the fifth arrow 70. After the cleaning member 10 has been moved sufficiently far over the frame beam 8, the teat cups 19 are connected to the teats. Positioning of the teat cups 19 is effected in the same manner as positioning the cleaning member 10.

In addition, the body weight of each animal is determined, after it has taken place in the milkbox 1. The determination of the body weight of the animal is effected with the aid of the four recording means 45 on which the animal's legs bear. When an animal again occupies the milkbox 1 for a subsequent milking run, the body weight of the animal is determined again and stored in the computer. In this manner the farmer can obtain a body weight status of each animal, which provides him with, for example, information about the lactation period of the relevant animal and/or the health condition of the animal.

## Claims

1. A construction for automatically milking animals, such as cows, comprising a milkbox (1) extending in a longitudinal direction and a milking machine, as well as a cleaning member (10) for cleaning the udder and/or teats of an animal, which cleaning member (10) during operation is rotatable and is movable in a direction which deviates from the longitudinal direction of the milkbox (1), characterized in that the cleaning member (10) is attached to a slide (30) mounted movable in the lateral direction of the milkbox (1), by means of which the cleaning member (10) is movable in a lateral direction during the cleaning of the udder and/or teats of the animal.

2. A construction as claimed in claim 1, characterized in that the cleaning member (10) includes at least one shaft (20), which extends in the longitudinal direction of the milkbox (1).

3. A construction as claimed in claim 2, characterized in that during operation the shaft (20) of the cleaning member (10) alternately can rotate anti-clockwise and clock-wise.

4. A construction as claimed in claim 2 or 3, characterized in that the cleaning member (10) comprises a plurality of textile discs (22).

5. A construction as claimed in any one of the preceding claims. characterized in that the cleaning member (10) includes a four-hinge linkage construction (29), for moving the cleaning member (10) in an upward direction.

6. A construction as claimed in claim 5, characterized in that the construction includes pressure adjusting means, with the aid of which the pressure with which the operating cylinder (34) pushes the cleaning member (10) against the animal's udder, can be adjusted.

7. A construction as claimed in claim 5 or 6, characterized in that the operating cylinder (34) is designed as a pneumatic cylinder.

8. A construction as claimed in any one of the preceding claims, characterized in that in operation the cleaning member (10) can be reciprocated in the longitudinal direction of the milkbox (1).

9. A construction as claimed in claim 8, characterized in that the cleaning member (10) is attached to a slide (30) extending in the transverse direction of the milkbox (1).

10. A construction as claimed in claim 9, characterized in that the slide (30) includes a block (33) which is slidable over guide rails (37).

11. A construction as claimed in claim 10, characterized in that the slidable block (33) includes first positioning means (42), with which the position of the block (33) with respect to guide rails (37) can be determined.

12. A construction as claimed in claim 11, characterized in that the slidable block (33) is also slidable over a cylinder (38), which contains a freely-supported piston (39) that is made of magnetic material.

13. A construction as claimed in claim 12, characterized in that the cylinder (38) containing the freely-supported piston (39) is made of synthetic resin material.

14. A construction as claimed in any one of the preceding claims, characterized in that the cleaning member (10) is attached to a robot arm construction (9), which can be rotated through at least 180° about a vertical shaft (12).

15. A construction as claimed in any one of the preceding claims, characterized in that the construction (9) includes recording means (45) which are accommodated in or on the floor (46) of the milkbox (1), and with which from the position of a leg of an animal on the floor (46), the location of the udder and/or the teats of the relevant animal can be determined.

16. A construction as claimed in claim 15, characterized in that with the aid of recording means (45) it is possible to determined the weight of an animal standing in the milkbox.

17. A construction as claimed in claim 15 or 16, characterized in that the recording means (45) are depressible.

18. A construction as claimed in any one of claims 15 to 17, characterized in that the recording means (45) are accommodated in four locations in or on the floor (46), on which the legs of an animal hear then the animal is standing in the milkbox (1).

19. A construction as claimed in any one of claims 15 to 18, characterized in that the recording means (45) comprise piezoelectric elements (47).

20. A construction as claimes in claim 19, characterized in that using second positioning means (62) and the piezoelectric elements (47) the position of a hind leg of an animal in the milkbox (1) can be determined.

21. A construction as claimed in claim 20, characterized in that the floor (46) of the milkbox (1) includes pressure-responsive elements (47) which comprise electromechanical contacts.

22. A construction as claimed in claim 20 or 21, characterized in that the pressure-responsive elements (47) or the piezoelectric elements (47) supply a signal, on the basis of which the weight of an animal can be determined.

23. A construction as claimed in claim 22, characterized in that the signal supplied by the pressure-responsive elements (47) or the piezoelectric elements (470 are entered into a computer and stored in a memory.

24. A construction as claimed in claim 23, characterized in that, in addition to the weight of an animal, also the identity of the animal determined on the basis of signals supplied by a transponder (62) around the neck of the relevant animal is stored in the memory of the computer.

## Patentansprüche

1. Vorrichtung zum automatischen Melken von Tieren, wie z. B. Kühen, mit einer sich in einer Längsrichtung erstreckenden Melkbox (1) und einer Melkmaschine sowie einem Reinigungsglied (10) zum Reinigen des Euters und/oder der Zitzen eines Tieres, wobei das Reinigungsglied (10) im Betrieb rotierbar und in einer von der Längsrichtung der Melkbox (1) abweichenden Richtung bewegbar ist,
dadurch gekennzeichnet, daß das Reinigungsglied (10) an einem Schlitten (30) gehalten ist, der in Querrichtung der Melkbox (1) bewegbar ist, und mittels dessen das Reinigungsglied (10) während der Reinigung des Euters und/oder der Zitzen des Tieres in Querrichtung bewegbar ist.

2. Vorrichtung nach Anspruch 1,
dadurch gekennzeichnet, daß das Reinigungsglied (10) mindestens eine Welle (20) aufweist, die sich in Längsrichtung der Melkbox (1) erstreckt.

3. Vorrichtung nach Anspruch 2,
dadurch gekennzeichnet, daß die Welle (20) des Reinigungsgliedes (10) im Betrieb abwechselnd gegen und im Uhrzeigersinn antreibbar ist.

4. Vorrichtung nach Anspruch 2 oder 3,
dadurch gekennzeichnet, daß das Reinigungsglied (10) eine Vielzahl von Textilscheiben (22) aufweist.

5. Vorrichtung nach einem der vorhergehenden Ansprüche,
dadurch gekennzeichnet, daß das Reinigungsglied (10) mit einem Viergelenk-Gestänge (29) nach oben bewegbar ist.

6. Vorrichtung nach Anspruch 5,
gekennzeichnet durch eine Druckeinstellvorrichtung, mittels der der Druck einstellbar ist, mit dem der Arbeitszylinder (34) das Reinigungsglied (10) gegen das Euter des Tieres drückt.

7. Vorrichtung nach Anspruch 5 oder 6,
dadurch gekennzeichnet, daß der Arbeitszylinder (34) als pneumatischer Zylinder ausgeführt ist.

8. Vorrichtung nach einem der vorhergehenden Ansprüche,
dadurch gekennzeichnet, daß das Reinigungsglied (10) im Betrieb in Längsrichtung der Melkbox (1) hin- und herbewegbar ist.

9. Vorrichtung nach Anspruch 8,
dadurch gekennzeichnet, daß das Reinigungsglied (10) an einem Schlitten (30) angebracht ist, der sich in Querrichtung der Melkbox (1) erstreckt.

10. Vorrichtung nach Anspruch 9,
dadurch gekennzeichnet, daß der Schlitten (30) ein Gleitstück (33) aufweist, das auf Führungsschienen (37) verschiebbar ist.

11. Vorrichtung nach Anspruch 10,
dadurch gekennzeichnet, daß das Gleitstück (33) eine erste Positioniervorrichtung (42) aufweist, mit der die Position des Gleitstückes (33) relativ zu den Führungsschienen (37) festlegbar ist.

12. Vorrichtung nach Anspruch 11,
dadurch gekennzeichnet, daß das Gleitstück (33) auch über einem Zylinder (38) verschiebbar ist, der einen frei gelagerten Kolben (39) aus einem magnetischen Material enthält.

13. Vorrichtung nach Anspruch 12,
dadurch gekennzeichnet, daß der den frei gelagerten Kolben (39) enthaltende Zylinder (38) aus Kunststoff hergestellt ist.

14. Vorrichtung nach einem der vorhergehenden Ansprüche,
dadurch gekennzeichnet, daß das Reinigungsglied (10) an einer Roboterarm-Vorrichtung (9) angebracht ist, die in einem Winkel von mindestens 180° um eine vertikale Achse (12) drehbar ist.

15. Vorrichtung nach einem der vorhergehenden Ansprüche,
dadurch gekennzeichnet, daß die Vorrichtung (9) eine Aufzeichnungseinrichtung (45) aufweist, die in oder auf dem Boden (46) der Melkbox (1) angeordnet ist, und mit der aufgrund der Position eines Beines des Tieres auf dem Boden (46) die Lage des Euters und/oder der Zitzen des betreffenden Tieres zu bestimmen ist.

16. Vorrichtung nach Anspruch 15,
dadurch gekennzeichnet, daß mittels der Aufzeichnungseinrichtung (45) das Gewicht eines in der Melkbox stehenden Tieres zu ermitteln ist.

17. Vorrichtung nach Anspruch 15 oder 16,
dadurch gekennzeichnet, daß die Aufzeichnungseinrichtung (45) eindrückbar ist.

18. Vorrichtung nach einem der Ansprüche 15 bis 17,
dadurch gekennzeichnet, daß die Aufzeichnungseinrichtung (45) in oder auf dem Boden (46) an vier Stellen angeordnet ist, an denen die Beine eines in der Melkbox (1) befindlichen Tieres stehen.

19. Vorrichtung nach einem der Ansprüche 15 bis 18,
dadurch gekennzeichnet, daß die Aufzeichnungseinrichtung (45) piezoelektrische Elemente (47) aufweist.

20. Vorrichtung nach Anspruch 19,
dadurch gekennzeichnet, daß mittels einer zweiten Positioniervorrichtung (62) und der piezoelektrischen Elemente (47) die Position eines Hinterbeines des Tieres in der Melkbox (1) zu ermitteln ist.

21. Vorrichtung nach Anspruch 20,
dadurch gekennzeichnet, daß der Boden (46) der Melkbox (1) druckempfindliche Elemente (47) aufweist, die elektromechanische Kontakte enthalten.

22. Vorrichtung nach Anspruch 20 oder 21,
dadurch gekennzeichnet, daß die druckempfindlichen Elemente (47) oder piezoelektrischen Elemente (47) ein Signal abgeben, aufgrund dessen das Gewicht eines Tieres zu ermitteln ist.

23. Vorrichtung nach Anspruch 22,
dadurch gekennzeichnet, daß das von den druckempfindlichen Elementen (47) oder piezoelektrischen Elementen (47) abgegebene Signal in einen Computer eingegeben und in einem Speicher gespeichert wird.

24. Vorrichtung nach Anspruch 23,
dadurch gekennzeichnet, daß zusätzlich zu dem Gewicht eines Tieres im Speicher des Computers auch die Identität des Tieres gespeichert wird, die aufgrund von Signalen ermittelt wird, welche von einem am Hals des betreffenden Tieres angeordneten Transponder (62) abgegeben werden.

## Revendications

1. Dispositif pour la traite automatique d'animaux, tels que des vaches, comprenant une stalle de traite (1) s'étendant dans un sens longitudinal et une machine à traire, ainsi qu'un organe de nettoyage (10) pour nettoyer le pis et/ou les trayons d'un animal, lequel organe de nettoyage (10) est, pendant le fonctionnement, rotatif et est mobile dans une direction qui dévie de la direction longitudinale de la stalle de traite (1),
**caractérisé** en ce que l'organe de nettoyage (10) est attaché à une glissière (30) montée mobile dans le sens latéral de la stalle de traite (1), au moyen de laquelle l'organe de nettoyage (10) est mobile dans un sens latéral pendant le nettoyage du pis et/ou des trayons de l'animal.

2. Dispositif selon la revendication 1, caractérisé en ce que l'organe de nettoyage (10) comporte au moins un arbre (20) qui s'étend dans le sens longitudinal de la stalle de traite (1).

3. Dispositif selon la revendication 2, caractérisé en ce que, pendant le fonctionnement, l'arbre (20) de l'organe de nettoyage (10) peut tourner alternativement dans le sens contraire à celui des aiguilles d'une montre et dans le sens des aiguilles d'une montre.

4. Dispositif selon la revendication 2 ou 3, caractérisé en ce que l'organe de nettoyage (10) comprend une pluralité de disques textiles (22).

5. Dispositif selon l'une quelconque des revendications précédentes, caractérisé en ce que l'organe de nettoyage (10) comporte une structure de liaison (29) à quatre articulations pour mouvoir l'organe de nettoyage (10) dans un sens vers le haut.

6. Dispositif selon la revendication 5, caractérisé en ce que le dispositif comporte un moyen de réglage de pression à l'aide duquel la pression avec laquelle le vérin actionneur (34) pousse l'organe de nettoyage (10) contre le pis de l'animal peut être réglée.

7. Dispositif selon la revendication 5 ou 6, caractérisé en ce que le vérin actionneur (34) est conçu comme un vérin pneumatique.

8. Dispositif selon l'une quelconque des revendications précédentes, caractérisé en ce que, dans le fonctionnement, l'organe de nettoyage (10) peut être animé d'un mouvement alternatif dans le sens longitudinal de la stalle de traite (1).

9. Dispositif selon la revendication 8, caractérisé en ce que l'organe de nettoyage (10) est attaché à une glissière (30) s'étendant dans le sens transversal de la stalle de traite (1).

10. Dispositif selon la revendication 9, caractérisé en ce que la glissière (30) comporte un bloc (33) qui est coulissant sur des rails de guidage (37).

11. Dispositif selon la revendication 10, caractérisé en ce que le bloc coulissant (33) comporte un premier moyen de positionnement (42) avec lequel la position du bloc (33) par rapport aux rails de guidage (37) peut être déterminée.

12. Dispositif selon la revendication 11, caractérisé en ce que le bloc coulissant (33) est aussi coulissant sur un cylindre (38) qui contient un piston (39) supporté librement, qui est fait de matériau magnétique .

13. Dispositif selon la revendication 12, caractérisé en ce que le cylindre (38) contenant le piston (39) supporté librement est fait de matériau en résine synthétique.

14. Dispositif selon l'une quelconque des revendications précédentes, caractérisé en ce que l'organe de nettoyage (10) est attaché à une structure (9) du bras de robot qui peut être tournée d'au moins 180° autour d'un arbre vertical (12).

15. Dispositif selon l'une quelconque des revendications précédentes, caractérisé en ce que la structure (9) comporte des moyens d'enregistrement (45) qui sont logés dans le plancher (46) de la stalle de traite (1) ou sur ce plancher, et avec lesquels, d'après la position d'une patte d'un animal sur le plancher (46), l'emplacement du pis et/ou des trayons de l'animal concerné peut être déterminé.

16. Dispositif selon la revendication 15, caractérisé en ce que, à l'aide de moyens d'enregistrement (45) il est possible de déterminer le poids d'un animal se tenant debout dans la stalle de traite.

17. Dispositif selon la revendication 15 ou 16, caractérisé en ce que les moyens d'enregistrement (45) sont dépressibles.

18. Dispositif selon l'une quelconque des revendications 15 à 17, caractérisé en ce que les moyens d'enregistrement (45) sont logés en quatre emplacements dans le plancher (46) ou sur celui-ci, sur lesquels portent les pattes d'un animal quand l'animal se tient debout dans la stalle de traite (1).

19. Dispositif selon l'une quelconque des revendications 15 à 18, caractérisé en ce que les moyens d'enregistrement (45) comprennent des éléments pièzo-électriques (47).

20. Dispositif selon la revendication 19, caractérisé en ce qu'en utilisant des deuxièmes moyens de positionnement (62) et les éléments pièzo-électriques (47), la position d'une patte postérieure d'un animal dans la stalle de traite (1) peut être déterminée.

21. Dispositif selon la revendication 20, caractérisé en ce que le plancher (46) de la stalle de traite comporte des éléments (47) sensibles à la pression, qui comprennent des contacts électromécaniques.

22. Dispositif selon la revendication 20 ou 21, caractérisé en ce que les éléments (47) sensibles à la pression ou les éléments pièzo-électriques (47) fournissent un signal d'après lequel le poids d'un animal peut être déterminé.

23. Dispositif selon la revendication 22, caractérisé en ce que les signaux fournis par les éléments (47) sensibles à la pression ou par les éléments pièzo-électriques (47) sont introduits dans un ordinateur et conservés dans une mémoire.

24. Dispositif selon la revendication 23, caractérisé en ce que, en plus du poids d'un animal, aussi l'identité de l'animal déterminée d'après des signaux fournis par un émetteur-récepteur (62) autour de l'encolure de l'animal concerné est conservée dans la mémoire de l'ordinateur.
